# EUROPEAN PATENT APPLICATION

(11) **EP 4 471 886 A1**
(43) Date of publication of application: **04.12.2024**
(21) Application number: 23746742.8
(22) Date of filing: 17.01.2023
(51) Int. Cl.: H01M 4/13, H01M 4/62

(54) **POSITIVE ELECTRODE FOR NONAQUEOUS ELECTROLYTE SECONDARY BATTERY, AND NONAQUEOUS ELECTROLYTE SECONDARY BATTERY**

(30) Priority: 28.01.2022 JP 2022012165
(71) Applicant: Panasonic Intellectual Property Management Co., Ltd., Osaka-shi, Osaka 540-6207 (JP)
(72) Inventor: OKI Yukihiro, Kadoma-shi, Osaka 571-0057 (JP); ASANO Kazuko, Kadoma-shi, Osaka 571-0057 (JP); SHIRAKAMI Atsuro, Kadoma-shi, Osaka 571-0057 (JP); HASEGAWA Chisaki, Kadoma-shi, Osaka 571-0057 (JP)
(74) Representative: Novagraaf International SA
(86) International application number: PCT/JP2023/001085
(87) International publication number: WO 2023/145528

(57) **Abstract**

In a nonaqueous electrolyte secondary battery (10) as an example embodiment, a positive electrode (11) includes a positive electrode core (30) and a positive electrode mixture layer (31) formed on the positive electrode core (30). The positive electrode mixture layer (31) contains a positive electrode active material, a polyacrylate, and a sulfated polysaccharide. Carrageenan is a preferable example of the sulfated polysaccharide.

## Description

### TECHNICAL FIELD

The present disclosure relates to a positive electrode for a non-aqueous electrolyte secondary battery and a non-aqueous electrolyte secondary battery using this positive electrode.

### BACKGROUND ART

A non-aqueous electrolyte secondary battery such as a lithium-ion battery has been required to have various performance such as a high energy density, high-speed charge-discharge performance, and good cycle characteristics and storage characteristics. Since an electrode, which is a main constituent of the battery, significantly affects these performance, there have been many investigations on the electrode. For example, Patent Literature 1 to 3 discloses inventions focusing on a binder included in an electrode mixture layer in order to improve the battery performance.

Patent Literature 1 discloses a binder including: a first polymer having a sulfonic acid group; and a second polymer such as a styrene/ethylene/butylene/styrene-based copolymer having no sulfonic acid group. Patent Literature 2 discloses a binder including: a pH-regulating functional agent such as a gluconate salt; and a metal crosslinking thickener to form a hydrophobic gel, such as alginate salt. Patent Literature 3 discloses that a binding resin such as a conjugated diene-based polymer and an acrylate-based polymer, and an anionic water-soluble polymer such as alginic acid and carrageenan are added into a slurry for forming an electrode mixture layer.

### CITATION LIST

### PATENT LITERATURE

PATENT LITERATURE 1: Japanese Unexamined Patent Application Publication No. 2009-4222
PATENT LITERATURE 2: Japanese Patent Publication No. 6739086
PATENT LITERATURE 3: Japanese Patent Publication No. 6344132

### SUMMARY

To further increase an energy density of a non-aqueous electrolyte secondary battery, a battery voltage needs to be raised. However, raising the voltage with the conventional battery configuration has a problem of increase in an amount of transition metal eluted from a positive electrode active material, which deteriorates battery performance such as cycle characteristics. As a result of investigation by the present inventors, it has been found that raising the battery voltage (for example, 4.6 V) drastically increases the amount of transition metal eluted when using polyvinylidene fluoride (PVDF), which is commonly used as a binder in a positive electrode mixture layer.

Meanwhile, forming a coating layer such as a polymer on a surface of the positive electrode active material in order to inhibit elution of the transition metal leads to deterioration of high-rate characteristics (high-speed charge-discharge performance). When binding force of active material particles and binding force of the mixture layer relative to an electrode core become weak, internal resistance increases. Thus, the binder in the electrode mixture layer is required to have large binding force. In addition, the binder is required to have ability to produce an electrode plate having appropriate flexibility and not to impair battery performance such as storage characteristics.

The conventional art including the art in Patent Literature 1 to 3 still has room for improvement of at least one of: achievement of both high-rate characteristics and storage characteristics; inhibition of increase in internal resistance; and imparting appropriate flexibility to the electrode plate.

A positive electrode for a non-aqueous electrolyte secondary battery according to the present disclosure is a positive electrode for a non-aqueous electrolyte secondary battery comprising: a positive electrode core; and a positive electrode mixture layer formed on the positive electrode core, wherein the positive electrode mixture layer includes a positive electrode active material, a polyacrylate salt, and a sulfated polysaccharide.

A non-aqueous electrolyte secondary battery according to the present disclosure comprises: the above positive electrode; a negative electrode; and a non-aqueous electrolyte.

According to the positive electrode for a non-aqueous electrolyte secondary battery according to the present disclosure, the high-rate characteristics and the storage characteristics can be improved while inhibiting the increase in the internal resistance of the battery even in a state of high battery voltage. The positive electrode for a non-aqueous electrolyte secondary battery according to the present disclosure has appropriate flexibility, and for example, the electrode plate hardly breaks, and the mixture layer is hardly dropped out from the core.

### BRIEF DESCRIPTION OF DRAWING

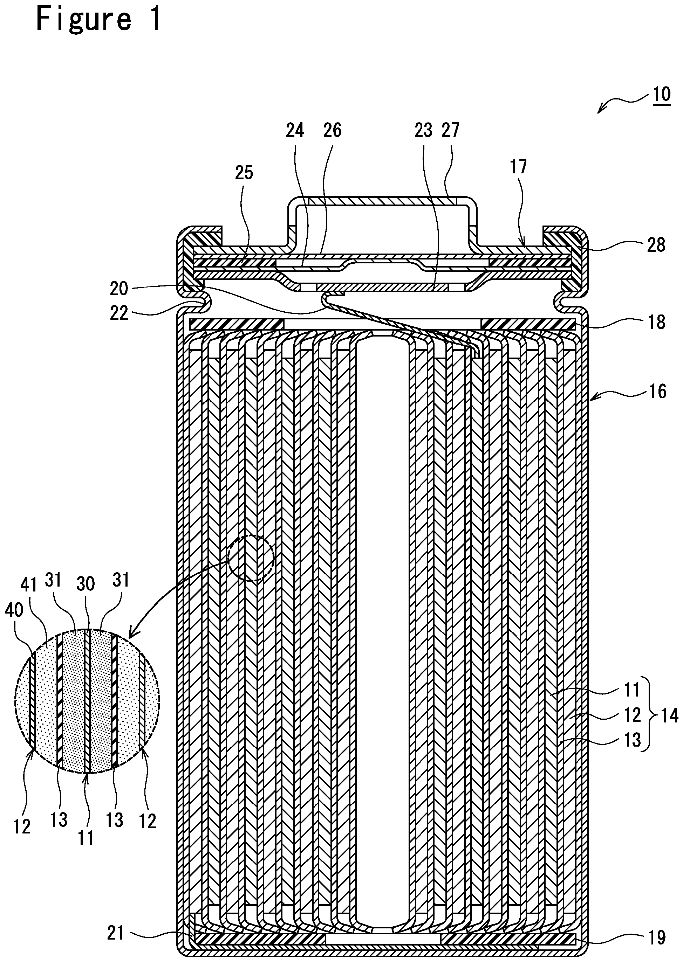

FIG. 1 is a sectional view of a non-aqueous electrolyte secondary battery of an example of an embodiment.

### DESCRIPTION OF EMBODIMENTS

The non-aqueous electrolyte secondary battery such as a lithium-ion battery has a high energy density and suitable for on-board use, power storage use, and the like, but it has been investigated to raise the voltage for a purpose of further increasing the energy density. As noted above, PVDF is commonly used for the binder in the positive electrode mixture layer, but in this case, it has been found that raising the battery voltage to approximately 4.6 V considerably increases the amount of transition metal eluted from the positive electrode active material. It is considered that this increase in the elution amount is caused by H and F in PVDF locally behaving an acid catalyst to increase side reactions on the positive electrode.

The present inventors have made intensive investigation in view of the above circumstances, and consequently ascertained that the elution of the transition metal under the high voltage is specifically inhibited by using a polyacrylate salt and a sulfated polysaccharide in combination as a binder in the positive electrode mixture layer. In addition, a non-aqueous electrolyte secondary battery having good high-rate characteristics and storage characteristics can be provided by using the polyacrylate salt and the sulfated polysaccharide in combination. Further, the increase in the internal resistance of the battery can be inhibited, and the appropriate flexibility can be imparted to the electrode plate.

A case where either of only the polyacrylate salt or the sulfated polysaccharide is used fails to yield the aforementioned effect. In this case, for example, a mixture slurry used for forming the positive electrode mixture layer forms gel, and it is difficult to perform production itself of the positive electrode. Alternatively, the electrode plate is hard and has no flexibility, and the mixture layer tends to be dropped out from the core. Although details will be described later, the aforementioned effect becomes more remarkable when carrageenan, specifically κ- carrageenan, is used as the sulfated polysaccharide.

Hereinafter, an example of an embodiment of the positive electrode for a non-aqueous electrolyte secondary battery according to the present disclosure and a non-aqueous electrolyte secondary battery using this positive electrode will be described in detail with reference to the drawing. Note that the scope of the present disclosure includes a configuration composed of selective combination of constituents of a plurality of embodiments and modified examples described hereinafter.

Hereinafter, a cylindrical battery housing a wound electrode assembly 14 in a bottomed cylindrical exterior housing can 16 will be exemplified, but the exterior of the battery is not limited to the cylindrical exterior housing can. The secondary battery according to the present disclosure may be, for example, a rectangular battery comprising a rectangular exterior hosing can, a coin-shaped battery comprising a coin-shaped exterior housing can, or a laminate battery comprising an exterior composed of a laminate sheet including a metal layer and a resin layer. The electrode assembly is not limited to the wound electrode assembly, and may be a stacked electrode assembly in which a plurality of positive electrodes and a plurality of negative electrodes are alternately stacked via a separator.

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, an electrolyte, and the exterior housing can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as LiPF₆ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two of the separator 13 are formed to be one size larger than at least the positive electrode 11, and disposed to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically the positive electrode 11, will be described in detail.

### [Positive Electrode]

The positive electrode 11 comprises a positive electrode core 30 and a positive electrode mixture layer 31 formed on the positive electrode core 30. For the positive electrode core 30, a foil of a metal stable within a potential range of the positive electrode 11, such as aluminum and an aluminum alloy, a film in which such a metal is disposed on a surface layer, or the like may be used. The positive electrode mixture layer 31 includes a positive electrode active material, a conductive agent, and a binder, and is preferably formed on both surfaces of the positive electrode core 30 except for an exposed portion where a positive electrode lead 20 is to be welded. The positive electrode 11 may be produced by, for example, applying a positive electrode mixture slurry including the positive electrode active material, the conductive agent, the binder, and the like on the positive electrode core 30, and drying and then compressing the coating film to form the positive electrode mixture layer 31 on both surfaces of the positive electrode core 30.

The positive electrode mixture layer 31 includes lithium-metal composite oxide particles as the positive electrode active material. The lithium-metal composite oxide is a composite oxide containing a metal element such as Co, Mn, Ni, and Al, other than Li. The metal element to constitute the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from the group consisting of Co, Ni, and Mn is preferably contained. A preferable example of the composite oxide is a lithium-metal composite oxide containing Ni, Co, and Mn, or a lithium-metal composite oxide containing Ni, Co, and Al.

A median diameter (D50) on a volumetric basis of the positive electrode active material is, for example, greater than or equal to 1 µm and less than or equal to 25 µm, and preferably greater than or equal to 3 µm and less than or equal to 20 µm. The D50 means a particle diameter at which a cumulative frequency is 50% from a smaller particle diameter side in a particle size distribution on a volumetric basis. The particle size distribution of the positive electrode active material may be measured by using a laser diffraction-type particle size distribution measuring device (for example, MT3000II, manufactured by MicrotracBEL Corp.) with water as a dispersion medium. A content of the positive electrode active material is, for example, greater than or equal to 90 mass% and less than or equal to 99.5 mass% relative to a mass of the positive electrode mixture layer 31.

Examples of the conductive agent included in the positive electrode mixture layer 31 include carbon materials such as carbon black such as acetylene black and Ketjenblack, graphite, carbon nanotube (CNT), carbon nanofiber, and graphene. A preferable content of the conductive agent, which depends on a type of the conductive agent and the like, is, for example, greater than or equal to 0.1 mass% and less than or equal to 10 mass%, and more preferably greater than or equal to 0.2 mass% and less than or equal to 5 mass% relative to a mass of the positive electrode mixture layer 31.

The positive electrode mixture layer 31 includes a polyacrylate salt and a sulfated polysaccharide. The polyacrylate salt and the sulfated polysaccharide function as a binder, and adhere to particle surfaces of the positive electrode active material to cover at least a part of the particle surfaces. Although the positive electrode mixture layer 31 may include a binder other than the polyacrylate salt and the sulfated polysaccharide within a range not impairing the object of the present disclosure, the positive electrode mixture layer 31 may substantially include only the polyacrylate salt and the sulfated polysaccharide as the binder. The positive electrode mixture layer 31 includes substantially no binder containing H and F, such as, for example, PVDF.

Using the polyacrylate salt and the sulfated polysaccharide in combination as the binder in the positive electrode mixture layer 31 specifically inhibits the elution of the transition metal under high voltage to obtain good high-rate characteristics and storage characteristics. In addition, since using the polyacrylate salt and the sulfated polysaccharide in combination yields appropriate flexibility and strong binding force of the positive electrode mixture layer 31, dropping out of the mixture layer due to impairing of flexibility and increase in the internal resistance due to decrease in the binding force hardly occur. Since the polyacrylate salt and the sulfated polysaccharide are water-soluble polymers, water may be used as a dispersion medium for the positive electrode mixture slurry in the present embodiment.

The polyacrylate salt applied for the positive electrode mixture layer 31 is a water-soluble polymer in which a part or all of carboxylic acid groups in polyacrylic acid, which is a polymer of acrylic acid, are neutralized. Specific examples of the polyacrylate salt include lithium polyacrylate, sodium polyacrylate, and ammonium polyacrylate. An example of the preferable polyacrylate salt is lithium polyacrylate (PAA-Li). When PAA-Li is used, the above effect becomes more remarkable. The polyacrylate salt is preferably a partially neutralized salt in which a part of carboxylic acid groups are neutralized.

A neutralization degree of the polyacrylate salt, in other words, a proportion of protons of the carboxylic acid groups substituted with cations such as Li⁺ (substitution proportion) is preferably greater than or equal to 50%, and more preferably greater than or equal to 80%. The neutralization degree of the polyacrylate salt is, for example, greater than or equal to 80% and less than or equal to 95%. A weight-average molecular weight (Mw) of the polyacrylate salt is not particularly limited, but preferably greater than or equal to 1000 and less than or equal to 500000. The positive electrode mixture layer 31 may include greater than or equal to two types of the polyacrylate salt having different neutralization degrees, Mw, and the like.

The sulfated polysaccharide applied for the positive electrode mixture layer 31 may be any polysaccharide having a sulfuric acid group. Specific examples of the sulfated polysaccharide include fucoidan, ascophyllan, heparin, funoran, porphyran, agaropectin, furcellan, carrageenan, sulfated dextran, sulfated pentosan, sulfated curdlan, and sulfated cellulose. The sulfated polysaccharide may be a salt of these polysaccharides. For the sulfated polysaccharide, greater than or equal to two types thereof may be used in combination.

An example of the preferable sulfated polysaccharide is carrageenan. When the carrageenan is used, the above effect becomes more remarkable. The carrageenan is a linear sulfur-containing polysaccharide, and has a structure in which D-galactose is repeated alternately with an α-1,3-bond and a β-1,4-bond. The carrageenan is classified into iota ( 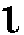 ), kappa (κ), and lambda (λ) depending on a number of the sulfuric acid groups and presence or absence of an anhydro bond.

For the positive electrode mixture layer 31, the carrageenan is preferably used as the sulfated polysaccharide, and specifically, at least one selected from the group consisting of t-carrageenan and κ-carrageenan is more preferably used. Specifically, t-carrageenan and κ-carrageenan are preferably used in combination, or when only one type of the carrageenan is used as the sulfated polysaccharide, κ-carrageenan are preferably used. When the positive electrode mixture layer 31 includes the polyacrylate salt (specifically PAA-Li) and κ-carrageenan as the binder, the active materials strongly adhere to each other, and the positive electrode mixture layer 31 becomes flexible, which more remarkably yields the effect of improving the high-rate characteristics, the storage characteristics, and the like of the battery.

A total content of the polyacrylate salt and the sulfated polysaccharide is, for example, greater than or equal to 0.1 mass% and less than or equal to 5 mass%, preferably greater than or equal to 0.2 mass% and less than or equal to 3 mass%, and more preferably greater than or equal to 0.3 mass% and less than or equal to 2 mass% relative to the mass of the positive electrode mixture layer 31. In this case, increase in the internal resistance can be more effectively inhibited while keeping the high energy density of the battery, and the effect of improving the high-rate characteristics, the storage characteristics, and the like becomes more remarkable. A mass ratio between the polyacrylate salt and the sulfated polysaccharide is not particularly limited, and an example thereof is greater than or equal to 20:80 and less than or equal to 80:20, and may be 50:50.

The positive electrode mixture layer 31 may include, for example, carboxymethylcellulose (CMC) or a salt thereof, polyethylene oxide (PEO), and the like as a water-soluble polymer other than the polyacrylate salt and the sulfated polysaccharide. Among these, a salt of CMC is preferably used. In this case, the stability of the positive electrode mixture slurry is improved, which facilitates formation of the good positive electrode mixture layer 31.

### [Negative Electrode]

The negative electrode 12 has a negative electrode core 40 and a negative electrode mixture layer 41 formed on the negative electrode core 40. For the negative electrode core 40, a foil of a metal stable within a potential range of the negative electrode 12, such as copper and a copper alloy, a film in which such a metal is disposed on a surface layer, or the like may be used. The negative electrode mixture layer 41 includes a negative electrode active material, a binder, and as necessary a conductive agent, and preferably formed on both surfaces of the negative electrode core 40 except for an exposed portion where a negative electrode lead 21 is to be welded. The negative electrode 12 may be produced by, for example, applying a negative electrode mixture slurry including the negative electrode active material, the binder, and the like on the negative electrode core 40, and drying and then compressing the coating film to form the negative electrode mixture layer 41 on both surfaces of the negative electrode core 40.

The negative electrode mixture layer 41 includes a carbon-based active material that reversibly occludes and releases lithium ions, as the negative electrode active material. A preferable carbon-based active material is graphite such as: a natural graphite such as flake graphite, massive graphite, and amorphous graphite; and an artificial graphite such as massive artificial graphite (MAG) and graphitized mesophase-carbon microbead (MCMB). From the viewpoints of improvement of the energy density and the like, the negative electrode active material may include a Si-based active material containing Si may be used in combination.

An example of the Si-based active material includes a silicon alloy, a silicon compound, and a composite material containing Si. Among these, a composite material containing Si is preferable. The preferable composite material is composite particles including an ion-conductive layer and Si particles dispersed in the ion-conductive layer. On surfaces of the composite particles containing Si, a conductive layer may be formed. An example of the composite particles is composite particles having a sea-island structure in which fine Si particles are substantially uniformly dispersed in an amorphous silicon oxide phase, and represented by the general formula SiOₓ (0<x≤2) as an entirety. The ion-conductive layer may be a silicate phase represented by the general formula Li_{2z}SiO_{(2+z)} (0<z<2) or an amorphous carbon phase.

For the binder included in the negative electrode mixture layer 41, PAN, a polyimide, an acryl resin, a polyolefin, styrene-butadiene rubber (SBR), and the like may be used. The negative electrode mixture layer 41 may include CMC or a salt thereof, polyacrylic acid (PAA) or a salt thereof, polyvinyl alcohol (PVA), and the like. Into the negative electrode mixture layer 41, a conductive agent such as carbon black and CNT may be added.

### [Separator]

For the separator 13, a porous sheet having an ion permeation property and an insulation property is used. Specific examples of the porous sheet include a fine porous thin film, a woven fabric, and a nonwoven fabric. As a material of the separator 13, a polyolefin such as polyethylene and polypropylene, cellulose, and the like are preferable. The separator 13 may have a single-layer structure or a multilayer structure. On a surface of the separator 13, a resin layer having high heat resistance, such as an aramid resin, may be formed.

On an interface between the separator 13 and at least one of the positive electrode 11 and the negative electrode 12, a filler layer including an inorganic filler may be formed. Examples of the inorganic filler include an oxide, a phosphate compound, and the like that contain metal elements such as Ti, Al, Si, and Mg. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Production of Positive Electrode]

As a positive electrode active material, a lithium-containing transition metal composite oxide represented by LiNi_{0.8}Mn_{0.2}O₂ was used. The positive electrode active material, acetylene black, lithium polyacrylate (PAA-Li, neutralization degree: approximately 90%), and t-carrageenan were mixed at a solid-content mass ratio of 100:1:0.5:0.5, and water was used as a dispersion medium to prepare a positive electrode mixture slurry. Then, this positive electrode mixture slurry was applied on both surfaces of a positive electrode core composed of aluminum foil, the coating film was dried and compressed, and then cut to a predetermined electrode size to produce a positive electrode in which a positive electrode mixture layer was formed on both surfaces of the positive electrode core. An exposed portion where the core surface was exposed was provided at a center in a longitudinal direction of the positive electrode, and a positive electrode lead was welded with ultrasonic wave to this exposed portion.

### [Production of Negative Electrode]

Graphite powder (negative electrode active material), sodium carboxymethylcellulose (CMC-Na), and a dispersion of styrene-butadiene rubber (SBR) were mixed at a solid-content mass ratio of 100:1:1, and water was used as a dispersion medium to prepare a negative electrode mixture slurry. Then, this negative electrode mixture slurry was applied on both surfaces of a negative electrode core composed of copper foil, the coating film was dried and compressed, and then cut to a predetermined electrode size to produce a negative electrode in which a negative electrode mixture layer was formed on both surfaces of the negative electrode core.

### [Preparation of Non-Aqueous Electrolyte Liquid]

Into a non-aqueous solvent in which ethylene carbonate (EC) and ethyl methyl carbonate (EMC) were mixed at a volume ratio of 30:70 (25°C), LiPF₆ was dissolved at a concentration of 1.0 M to prepare a non-aqueous electrolyte liquid.

### [Production of Battery]

Leads were welded to the above positive electrode and negative electrode, and the positive electrode and the negative electrode were spirally wound via a separator made of polyethylene to produce a wound electrode assembly. Insulating plates were disposed on upper and lower sides of the electrode assembly, and the electrode assembly was housed in an exterior housing can. In this time, the positive electrode lead was welded to an internal terminal plate of a sealing assembly, and the negative electrode lead was welded to a bottom of the can. Thereafter, the non-aqueous electrolyte liquid was injected into the exterior housing can by a pressure-reducing method, and an opening of the exterior housing can was sealed with the sealing assembly via a gasket to produce a cylindrical non-aqueous electrolyte secondary battery.

### <Example 2>

A cylindrical non-aqueous electrolyte secondary battery was produced in the same manner as in Example 1 except that: PAA-Li, t-carrageenan, and κ-carrageenan were used as the binder in the positive electrode mixture layer; and these were added so that each of the contents was 0.2 mass% relative to the mass of the mixture layer.

### <Example 3>

A cylindrical non-aqueous electrolyte secondary battery was produced in the same manner as in Example 2 except that each of the contents of PAA-Li, t-carrageenan, and κ-carrageenan was changed to 0.3 mass%.

### <Example 4>

A cylindrical non-aqueous electrolyte secondary battery was produced in the same manner as in Example 2 except that each of the contents of PAA-Li, t-carrageenan, and κ-carrageenan was changed to 0.4 mass%.

### <Example 5>

A cylindrical non-aqueous electrolyte secondary battery was produced in the same manner as in Example 2 except that each of the contents of PAA-Li, t-carrageenan, and κ-carrageenan was changed to 0.5 mass%.

### <Example 6>

A cylindrical non-aqueous electrolyte secondary battery was produced in the same manner as in Example 1 except that only t-carrageenan was used as the binder in the positive electrode mixture layer. Note that t-carrageenan was added so that the content was 0.9 mass% relative to the mass of the mixture layer.

### <Example 7>

A cylindrical non-aqueous electrolyte secondary battery was produced in the same manner as in Example 6 except that only κ-carrageenan was used as the binder in the positive electrode mixture layer.

### <Example 8>

A cylindrical non-aqueous electrolyte secondary battery was produced in the same manner as in Example 6 except that only PAA-Li was used as the binder in the positive electrode mixture layer.

### <Example 9>

A cylindrical non-aqueous electrolyte secondary battery was produced in the same manner as in Example 6 except that only PVDF was used as the binder in the positive electrode mixture layer. In Example 9, N-methyl-2-pyrrolidone (NMP) was used as the dispersion medium of the positive electrode mixture slurry.

The properties of the positive electrode mixture slurry, flexibility of the positive electrode, and high-rate characteristics, resistance increase, and storage characteristics of the battery were evaluated by the following methods. The evaluation results are shown in Table 1 or Table 2 together with the type and amount of the binder added that is used in the positive electrode.

### [Evaluation of Slurry Properties]

The positive electrode mixture slurries prepared in each of Examples were classified to Good, Fair, and Poor based on the following judgement criteria.
Good: The slurry has appropriate viscosity, and causes no problem in applicability.
Fair: The slurry has an unstable state, and applicability is not good.
Poor: The slurry forms gel, and causes difficulty in application.

### [Evaluation of Electrode Plate Flexibility]

The positive electrodes prepared in each of Examples were classified to Good, Fair, and Poor based on the following judgement criteria.

Good: The electrode plate has appropriate flexibility, and does not break even with deeply bent.

Fair: The electrode plate breaks with deeply bent, but dropping out of the mixture layer from the core is not observed.

Poor: The mixture layer is dropped out from the core before the electrode plate breaks with deeply bent.

### [Evaluation of High-Rate Characteristics (Measurement of 2.0 C / 0.1 C Discharge Capacity)]

Under a temperature environment at 25°C, the battery of the evaluation target was charged at a constant current value of 0.1 C until a battery voltage reached 4.5 V (CC-charge). Thereafter, the battery was discharged at a constant current value of 0.1 C until the battery voltage reached 2.5 V (CC-discharge). A ratio (capacity retention) of discharge capacity where the current value during charge and discharge was changed to 2.0 C (2.0-C discharge capacity) to the discharge capacity at this time (0.1-C discharge capacity) was determined.

### [Evaluation of Increase Rate of Direct Current Resistance (DCIR)]

Under a temperature environment at 55°C, the battery of the evaluation target was CC-charged at a constant current of 0.3 C until a charge depth (SOC) of 50%, and after the SOC reached 50%, the battery was charged at a constant voltage (CV-charged) until a current value reached 0.02 C. Thereafter, the battery was CC-discharged at a constant current value of 0.3 C until the battery voltage reached 2.5 V. Each of a battery subjected to this charge-discharge cycle once and a battery subjected to this charge-discharge cycle 18 times was CC-charged under a temperature environment at 25°C at a constant current of 0.3 C until the battery voltage reached 4.5 V, and the battery was CV-charged at 4.5 V until the current value reached 0.02 C. Thereafter, the battery was CV-discharged at a constant current of 0.1 C for 10 seconds. A value of a difference between an open circuit voltage (OCV) and a closed circuit voltage (CCV) after 10 seconds from the discharge was divided by the discharge current after 10 seconds from the discharge to be specified as DCIR, and an increase rate of DCIR after the 18 cycles relative to DCIR after the first cycle was calculated.

### [Evaluation of Storage Characteristics (Measurement of Amount of Gas Generated during Charged Storage)]

Under a temperature environment at 25°C, the battery of the evaluation target in which the volume was measured by Archimedes method was subjected to initial charge (CCCV charge until a battery voltage reached 4.5 V), and the battery in this charged state was left to stand under a temperature environment at 55°C for 72 hours. A volume of the battery after the charged storage was measured by Archimedes method, and an amount of gas generated was determined with a difference from the volume before the initial charge.

**[Table 1]**

| | | Example 1 | Example 2 | Example 3 | Example 4 | Example 5 |
|---|---|---|---|---|---|---|
| Binder | PAA-Li | 0.5 | 0.2 | 0.3 | 0.4 | 0.5 |
| | κ- carrageenan | - | 0.2 | 0.3 | 0.4 | 0.5 |
| | 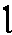 - carrageenan | 0.5 | 0.2 | 0.3 | 0.4 | 0.5 |
| Evaluation | Slurry properties | Fair | Good | Good | Good | Good |
| | Electrode plate flexibility | Fair | Good | Good | Good | Good |
| | Capacity retention | - | - | 86.8% | 84.5% | - |
| | Resistance increase | - | - | 153% | 147% | - |
| | Amount of gas generated | - | 0.38cc/g | - | - | 0.15cc/g |

**[Table 2]**

| | | Example 6 | Example 7 | Example 8 | Example 9 |
|---|---|---|---|---|---|
| Binder | PVDF | - | - | - | 0.9 |
| | PAA-Li | - | - | 0.9 | - |
| | κ- carrageenan | - | 0.9 | - | - |
| | 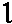 - carrageenan | 0.9 | - | - | - |
| Evaluation | Slurry properties | Poor | Poor | Good | Good |
| | Electrode plate flexibility | Poor | Poor | Poor | Good |
| | Capacity retention | - | - | - | 80.3% |
| | Resistance increase | - | - | - | 180% |
| | Amount of gas generated | - | - | - | 0.72cc/g |

As shown in Table 1 and Table 2, the batteries of Examples 2 and 5 yield a reduced amount of gas generated during the charged storage under the high-temperature condition compared with the battery of Example 9, and exhibit excellent storage characteristics. It is considered that, when PVDF was used for the binder in the positive electrode mixture layer, H and F in PVDF behave as an acid catalyst, which increases side reactions on the positive electrode, resulting in the increased amount of gas generated. In contrast, when PAA-Li and the carrageenan are used as the binder, it is considered that particle surfaces of the positive electrode active material are effectively protected to sufficiently inhibit the side reactions. Specifically, the battery of Example 5, which had a high content of the binder, yielded superior storage characteristics. The batteries of Examples 1, 3, and 4 have good storage characteristics similar to the batteries of Examples 1 and 5.

The batteries of Examples 3 and 4 exhibit a high ratio of 2.0-C discharge capacity to 0.1-C discharge capacity (2.0 C / 0.1 C discharge capacity retention) compared with the battery of Example 9, and excellent high-rate characteristics. It is considered that PAA-Li and the carrageenan achieve the good high-rate characteristics, and protect the particle surfaces of the positive electrode active material to inhibit the side reactions, resulting in reduction in the amount of transition metal eluted. Further, the batteries of Examples 3 and 4 exhibit a low increase rate of the direct resistance compared with the battery of Example 9. PAA-Li and the carrageenan have a strong binding force, and in the batteries of Examples 3 and 4, it is considered that the particles of the positive electrode active material strongly adhere to each other. Thus, increase in the resistance is presumably inhibited. The batteries of Examples 1, 2, and 5 also have the high-rate characteristics and the function of inhibiting the internal resistance similar to the batteries of Examples 3 and 4.

In Example 1, the positive electrode mixture slurry has a rather unstable state and applicability of the slurry is poor compared with the cases of Examples 2 to 5. Example 1 also yields rather deteriorated flexibility of the electrode plate compared with the cases of Examples 2 to 5. From this result, it is understood that use of at least κ-carrageenan stabilizes the slurry state to form the good electrode plate, which is effective in terms of improvement of the high-rate characteristics, the storage characteristics, and the function of inhibiting the resistance increase of the battery.

Note that, in the case of using only the carrageenan as the binder (Examples 6 and 7), the slurry formed a gel, which made the production itself of the positive electrode difficult. In the case of using only PAA-Li (Example 8), the electrode plate was hard and had no flexibility, and the mixture layer was dropped out from the core.

### REFERENCE SIGNS LIST

10 non-aqueous electrolyte secondary battery, 11 positive electrode, 12 negative electrode, 13 separator, 14 electrode assembly, 16 exterior housing can, 17 sealing assembly, 18, 19 insulating plate, 20 positive electrode lead, 21 grooved portion, 23 internal terminal plate, 24 lower vent member, 25 insulating member, 26 upper vent member, 27 cap, 28 gasket, 30 positive electrode core, 31 positive electrode mixture layer, 40 negative electrode core, 41 negative electrode mixture layer

## Claims

1. A positive electrode for a non-aqueous electrolyte secondary battery, comprising:
a positive electrode core; and
a positive electrode mixture layer formed on the positive electrode core,
wherein the positive electrode mixture layer includes a positive electrode active material, a polyacrylate salt, and a sulfated polysaccharide.

2. The positive electrode for a non-aqueous electrolyte secondary battery according to claim 1, wherein the sulfated polysaccharide is carrageenan.

3. The positive electrode for a non-aqueous electrolyte secondary battery according to claim 1 or 2, wherein the polyacrylate salt is lithium polyacrylate.

4. The positive electrode for a non-aqueous electrolyte secondary battery according to any one of claims 1 to 3, wherein a total content of the polyacrylate salt and the sulfated polysaccharide is greater than or equal to 0.1 mass% and less than or equal to 5 mass% relative to a mass of the positive electrode mixture layer.

5. A non-aqueous electrolyte secondary battery, comprising:
the positive electrode for a non-aqueous electrolyte secondary battery according to any one of claims 1 to 4;
a negative electrode; and
a non-aqueous electrolyte.
